# EUROPEAN PATENT APPLICATION

(11) **EP 4 835 544 A1**
(43) Date of publication of application: **04.11.2026**
(21) Application number: 24910749.1
(22) Date of filing: 12.12.2024
(51) Int. Cl.: G02B 27/28

(54) **OPTICAL SYSTEM AND DISPLAY APPARATUS**

(30) Priority: 29.12.2023 CN 202311864589
(71) Applicant: Beijing Zitiao Network Technology Co., Ltd., Beijing 100190 (CN)
(72) Inventor: LI, Xin, Beijing 100028 (CN); FU, Ling, Beijing 100028 (CN); ZHOU, Yan, Beijing 100028 (CN); LI, Xiaokai, Beijing 100028 (CN)
(74) Representative: Isarpatent
(86) International application number: PCT/CN2024/138776
(87) International publication number: WO 2025/139818

(57) **Abstract**

An optical system and a display apparatus. The optical system comprises a lens assembly, a polarization reflection layer, a transflective film and a phase retardation film. The lens assembly comprises at least two lenses, and the at least two lenses comprise a first surface, a second surface, a third surface and a fourth surface which are successively arranged in the optical axis direction of the lens assembly. The polarization reflection layer is arranged on the side of the first surface away from the fourth surface, the transflective film is arranged on the side of the fourth surface away from the third surface, and the phase retardation film is arranged on the side of the transflective film facing the first surface. The second surface and the third surface are both Fresnel surfaces, and surface profiles of the second surface and the third surface are complementary to each other. The at least two lenses comprise lenses differing from each other in terms of at least one of the dispersion coefficient or the refractive index. The second surface and the third surface are configured to be Fresnel surfaces, and the at least two lenses are configured to differ from each other in terms of at least one of the dispersion coefficient or the refractive index, thus helping to achieve chromatic aberration correction by means of cooperation of the Fresnel surfaces and the at least two lenses.

## Description

This application claims the priority to and benefits of the Chinese Patent Application No. 202311864589.5, which was filed on December 29, 2023. The aforementioned patent application is hereby incorporated by reference in their entireties.

### TECHNICAL FIELD

At least one embodiment of the present disclosure relates to an optical system and a display apparatus.

### BACKGROUND

Head-mounted display (HMD) technology is a simulation technology that uses a head-mounted display optical system to image a digitized image generated by a computer and output by an image source in a field of view of a user, thereby realizing a reproduction of a specific environment.

### SUMMARY

At least one embodiment of the present disclosure provides an optical system. The optical system includes: a lens assembly including at least two lenses, the at least two lenses including a first surface, a second surface, a third surface, and a fourth surface that are arranged in sequence along a direction of an optical axis of the lens assembly; a reflective polarizing layer disposed on a side of the first surface away from the fourth surface; a transflective film disposed on a side of the fourth surface away from the third surface; and a phase retardation film disposed on a side of the transflective film facing the first surface; where the first surface is a concave surface, and the fourth surface is a convex surface; the second surface and the third surface are both Fresnel surfaces, and surface types of the second surface and the third surface are complementary; and the at least two lenses include lenses that differ in at least one of a dispersion coefficient or a refractive index.

For example, according to at least one embodiment of the present disclosure, a ratio of a radius of curvature of the second surface to an effective focal length of the optical system is in a range from -6 to 2.

For example, according to at least one embodiment of the present disclosure, a tooth width of the second surface is in a range from 0.3 mm to 1 mm.

For example, according to at least one embodiment of the present disclosure, the second surface is a planar Fresnel surface or a curved Fresnel surface.

For example, according to at least one embodiment of the present disclosure, the at least two lenses include a first lens and a second lens that are arranged along the direction of the optical axis, the first lens includes the first surface and the second surface, and the second lens includes the third surface and the fourth surface; and a dispersion coefficient of the first lens is greater than a dispersion coefficient of the second lens.

For example, according to at least one embodiment of the present disclosure, the dispersion coefficient of the first lens is in a range from 25 to 65, and the dispersion coefficient of the second lens is in a range from 30 to 54.

For example, according to at least one embodiment of the present disclosure, the at least two lenses include a first lens and a second lens that are arranged along the direction of the optical axis, the first lens includes the first surface and the second surface, the second lens includes the third surface and the fourth surface, and a refractive index of the first lens is less than a refractive index of the second lens.

For example, according to at least one embodiment of the present disclosure, a ratio of a radius of curvature of the first surface to a radius of curvature of the fourth surface is in a range from 1.2 to 1.7.

For example, according to at least one embodiment of the present disclosure, a ratio of a radius of curvature of the first surface to an effective focal length of the optical system is in a range from -3.5 to - 1.5, and a conic coefficient of the first surface is in a range from -10 to -0.5.

For example, according to at least one embodiment of the present disclosure, a ratio of a radius of curvature of the fourth surface to an effective focal length of the optical system is in a range from -2.0 to 2.0, and a conic coefficient of the fourth surface is in a range from -10 to -0.1.

For example, according to at least one embodiment of the present disclosure, a distance between two intersection points at which the first surface and the second surface intersect with the optical axis is a first distance; a distance between two intersection points at which the third surface and the fourth surface intersect with the optical axis is a second distance; and a ratio of the first distance to the second distance is in a range from 2 to 4.

For example, according to at least one embodiment of the present disclosure, a ratio of the first distance to an effective focal length of the optical system is in a range from 0.3 to 0.5, and a ratio of the second distance to the effective focal length of the optical system is in a range from 0.1 to 0.3.

For example, according to at least one embodiment of the present disclosure, the at least two lenses include a first lens and a second lens that are arranged along the direction of the optical axis, the first lens includes the first surface and the second surface, and the second lens includes the third surface and the fourth surface; and a ratio of a center thickness to an edge thickness of the first lens is greater than 1 and less than 3; and a ratio of a center thickness to an edge thickness of the second lens is greater than 0.5 and less than 2.

For example, according to at least one embodiment of the present disclosure, the at least two lenses include a first lens, a second lens, and a third lens that are arranged in sequence along the direction of the optical axis, the first lens includes the first surface and the second surface, the second lens includes the third surface, and the third lens includes the fourth surface; the second lens further includes a fifth surface opposite to the third surface, and the third lens further includes a sixth surface between the fifth surface and the fourth surface; and at least two selected from the group consisting of the first lens, the second lens, and the third lens have different dispersion coefficients.

For example, according to at least one embodiment of the present disclosure, a ratio of a radius of curvature of the fifth surface to a radius of curvature of the second surface is in a range from 0.9 to 1.1, the fifth surface and the sixth surface are both Fresnel surfaces, and surface types of the fifth surface and the sixth surface are complementary.

For example, according to at least one embodiment of the present disclosure, the fifth surface is a planar Fresnel surface or a curved Fresnel surface.

At least one embodiment of the present disclosure provides a display apparatus. The display apparatus includes a display screen and the optical system according to any one of the preceding embodiments, and the display screen is located on a side of the transflective film away from the reflective polarizing layer.

### BRIEF DESCRIPTION OF DRAWINGS

In order to more clearly explain the technical solutions of the embodiments of the present disclosure, the drawings of the embodiments will be briefly described in the following; it is obvious that the described drawings are only related to some embodiments of the present disclosure and thus are not limitative of the present disclosure.
Fig. 1 is a schematic diagram of an optical system according to an example of at least one embodiment of the present disclosure.
Figs. 2A and 2B are schematic diagrams of light deflection according to an example of at least one embodiment of the present disclosure.
Fig. 2C is a schematic diagram of light deflection according to another example of at least one embodiment of the present disclosure.
Fig. 3 is a schematic diagram of an optical path of a display apparatus according to an example of at least one embodiment of the present disclosure.
Fig. 4 is a schematic diagram of an optical system according to an example of at least one embodiment of the present disclosure.
Fig. 5A is a spot diagram of the optical system shown in Fig. 1.
Fig. 5B is a curve diagram of a change in the size of a diffuse spot with the field of view of the optical system shown in Fig. 1.
Fig. 5C is a distortion diagram of the optical system shown in Fig. 1.
Fig. 5D is a lateral chromatic aberration diagram of an optical system.
Fig. 5E is a lateral chromatic aberration diagram of the optical system shown in Fig. 1.
Fig. 6 is a schematic diagram of an optical system according to an example of at least one embodiment of the present disclosure.
Fig. 7 is a schematic diagram of an optical system according to an example of at least one embodiment of the present disclosure.

### DETAILED DESCRIPTION

In order to make the purposes, technical solutions and advantages of the embodiments of the present disclosure clearer, the technical solutions of the embodiments will be described in a clearly and fully understandable way in connection with the drawings in the embodiments of the present disclosure. Obviously, the described embodiments are just a part but not all of the embodiments of the present disclosure. Based on the embodiments of the present disclosure, those skilled in the art may obtain other embodiment(s), without any inventive work, which should be within the scope of the present disclosure.

Unless otherwise defined, the technical or scientific terms used herein should have the ordinary meanings as understood by those with ordinary skills in the field to which the present disclosure belongs. The terms "first", "second" and similar terms used in the present disclosure do not represent any order, quantity or importance, but are merely used to distinguish between different components. The terms "comprise" or "include" or similar terms mean that the elements or objects preceding the terms include the elements or objects listed after the terms and their equivalents, without excluding other elements or objects.

The features such as "perpendicular", "parallel" and "identical" etc. used in the present disclosure include strict features such as "perpendicular", "parallel" and "identical" etc., as well as "approximately perpendicular", "approximately parallel" and "approximately identical" etc. including certain errors, which, considering the measurement and the errors associated with the measurement of a specific quantity (i.e., the limitations of the measurement system), means within an acceptable deviation range for a specific value determined by those of ordinary skill in the art. The "center" in the embodiments of the present disclosure may include a strict geometric center position and a substantially center position within a small area around the geometric center. For example, "substantially" may mean within one or more standard deviations, or within 10% or 5% of the value.

The imaging principle of a head-mounted display (also known as head-mounted display) optical system is similar to the imaging principle of a magnifying glass, i.e., an object (a picture source or a video source) is located in front of an object-side focal plane of an optical lens (for example, within one focal length), and a human eye located on the other side of the optical lens may see that an erect and magnified virtual image is formed at a distance on the same side of the object through the optical lens. The head-mounted display optical system includes a single-piece or multi-piece thick lens, a Fresnel lens, a folding optical system (also known as Pancake), a liquid crystal lens with variable optical power, a metalens, and the like. With an emphasis on thinning and weight reduction to bring a better wearing experience for a user, the head-mounted display optical system still needs to be based on the premise of satisfying imaging optical performance. For example, the head-mounted display optical system needs to consider basic indicators such as clarity, field of view, distortion, and chromatic aberration. Many optical indicators need to meet design requirements in a hardware design stage, meet accuracy requirements in an optical machining, manufacturing and assembly stage, and be combined with subsequent software (image) processing technology (such as a foveated rendering technology for improving clarity, an asymmetric field of view application, an anti-distortion image processing, and an anti- dispersion image processing for improving the field of view experience), thereby bringing better experience for the user of the head-mounted display optical system.

In research, the inventors of the present application have found that the aforementioned optical indicators are often complementary and contradictory. For example, an optical system with low dispersion or low chromatic aberration and no distortion is beneficial to providing better clarity, however, a large field of view brings challenges to clarity, distortion and dispersion.

Taking some liquid crystal display screens as an example, the size of a liquid crystal display screen (for example, a diagonal length) exceeds 2 inches to 2.3 inches, the diameter of an optical lens of a head-mounted display optical system is, for example, 30 mm to 50 mm (the diameter size varies with the change of the field of view), and the size of the screen is sufficiently adapted to the optical lens. For example, the sizes of the screen and the optical lens are relatively close, the incident angle of the light rays of the screen reaching the surface of the optical lens is very small, and the angular deviation of the light rays of different wavelengths after refraction and reflection is also relatively small. Meanwhile, the single pixel size of the screen is relatively large (for example, the single pixel size is larger than 20 micrometers), so the influence of the height difference (lateral chromatic aberration) formed by the light rays of different wavelengths on the image plane on the imaging quality is relatively small.

In a head-mounted display optical system using an organic light emitting diode (OLED) on silicon display screen, the screen size is usually 1 inch to 1.4 inches due to process limitations. When the screen is matched with an optical lens with a small aperture (for example, a diameter of 25 mm), the difficulty in matching is relatively small. The small aperture optical lens corresponds to a relatively small field of view, and to adapt to a certain wearing error, the field of view finally obtained by a user is mostly not more than 90°. If the field of view is to be increased, the aperture of the optical lens needs to be increased accordingly. When adapting a large aperture optical lens to a small size screen, the inventors have found that the incident angle of the light rays of a large field of view at the edge of the screen on the optical lens is too large, which leads to an increase in the lateral chromatic aberration. In addition, since the pixel size of the Silicon-based OLED screen is less than 10 micrometers, the tolerance for the lateral chromatic aberration is much stricter than the tolerance of the liquid crystal display screen. Therefore, it is difficult to correct the chromatic aberration in a large field of view head-mounted display optical system using an inch-level high-definition display.

At least one embodiment of the present disclosure provides an optical system. The optical system includes a lens assembly, a reflective polarizing layer, a transflective film, and a phase retardation film. The lens assembly includes at least two lenses. The at least two lenses include a first surface, a second surface, a third surface, and a fourth surface that are arranged in sequence along a direction of an optical axis of the lens assembly. The reflective polarizing layer is disposed on a side of the first surface away from the fourth surface. The transflective film is disposed on a side of the fourth surface away from the third surface. The phase retardation film is disposed on a side of the transflective film facing the first surface. The first surface is a concave surface, and the fourth surface is a convex surface. The second surface and the third surface are both Fresnel surfaces, and surface types of the second surface and the third surface are complementary. The at least two lenses include lenses that differ in at least one of a dispersion coefficient or a refractive index.

At least one embodiment of the present disclosure provides a display apparatus. The display apparatus includes a display screen and the optical system of any one of the preceding embodiments, and the display screen is located on a side of the transflective film away from the reflective polarizing layer.

According to the optical system and the display apparatus provided by at least one embodiment of the present disclosure, the lens assembly including at least two lenses is provided with attachment positions for the reflective polarizing layer, the transflective film and the phase retardation film, so that the folding of light rays is realized through the reflective polarizing layer and the transflective film. Meanwhile, the second surface and the third surface are configured as Fresnel surfaces, and the at least two lenses are configured to differ in at least one of a dispersion coefficient or a refractive index, which is beneficial to increasing the degree of freedom in design through the Fresnel surfaces, thereby correcting the chromatic aberration in cooperation with the at least two lenses, and resulting in a larger field of view, higher clarity, and thinner and lighter weight of the optical system.

The optical system and the display apparatus will be described below in conjunction with the drawings and through some embodiments.

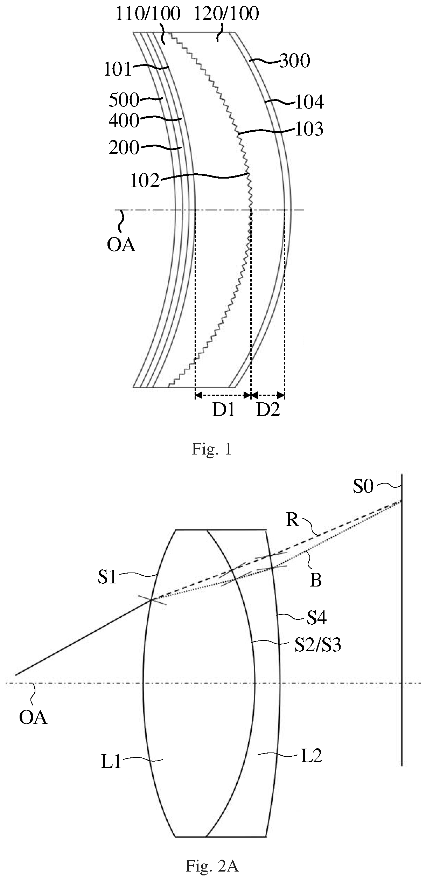

Fig. 1 is a schematic diagram of an optical system according to an example of at least one embodiment of the present disclosure. Referring to Fig. 1, at least one embodiment of the present disclosure provides an optical system. The optical system includes a lens assembly 100, a reflective polarizing layer 200, a transflective film 300, and a phase retardation film 400. The lens assembly 100 includes at least two lenses. For example, as shown in Fig. 1, the lens assembly 100 may be formed by combining two lenses, namely a lens 110 and a lens 120.

As shown in Fig. 1, the at least two lenses include a first surface 101, a second surface 102, a third surface 103, and a fourth surface 104 that are arranged in sequence along a direction of an optical axis OA of the lens assembly 100. For example, a side of the first surface 101 away from the fourth surface 104 is a light exit side of the optical system. For example, when the optical system is applied to a display apparatus, a display screen is located on a side of the fourth surface 104 of the optical system away from the first surface 101, and light rays emitted by the display screen enter from the fourth surface 104 and exit from the first surface 101.

As shown in Fig. 1, the reflective polarizing layer 200 is disposed on a side of the first surface 101 away from the fourth surface 104, the transflective film 300 is disposed on a side of the fourth surface 104 away from the third surface 103, and the phase retardation film 400 is disposed on a side of the transflective film 300 facing the first surface 101. For example, when the optical system is applied to the display apparatus, the display screen is located on a side of the transflective film 300 of the optical system away from the reflective polarizing layer 200. For example, the light rays incident on the lens assembly 100 after being transmitted through the transflective film 300 are configured to fold between the transflective film 300 and the reflective polarizing layer 200, and exit from the reflective polarizing layer 200, thereby forming a folded optical path through the reflective polarizing layer 200, the transflective film 300, and the phase retardation film 400.

As shown in Fig. 1, the at least two lenses include lenses that differ in at least one of a dispersion coefficient or a refractive index. Since the same transparent medium has a difference in refractive index for light of different wavelengths, and white light is composed of light of different colors and different wavelengths, the transparent substance will have a dispersion phenomenon when refracting the white light. The dispersion coefficient (also known as the Abbe number) is an index used to represent the dispersion capability of the transparent medium, and is used to measure the degree of light dispersion of the transparent medium. Generally speaking, the larger the refractive index of the medium, the more serious the dispersion and the smaller the Abbe number; on the contrary, the smaller the refractive index of the medium, the lighter the dispersion and the larger the Abbe number.

As shown in Fig. 1, the first surface 101 is a concave surface, and the fourth surface 104 is a convex surface. For example, the first surface 101 is an aspheric surface. For example, the fourth surface 104 is an aspheric surface. For example, the transflective film 300 is disposed on a side of the convex surface away from the concave surface. For example, the reflective polarizing layer 200 and the phase retardation film 400 are both disposed on a side of the concave surface away from the convex surface.

As shown in Fig. 1, the second surface 102 and the third surface 103 are both Fresnel surfaces. The Fresnel surface refers to a non-smooth side surface of two opposite surfaces of a Fresnel lens. The Fresnel lens is also known as a threaded lens. One side surface of the Fresnel lens is a smooth surface, and the other side surface of the Fresnel lens is divided into a plurality of concentric circular grooves (i.e., Fresnel zones). The degree of bending of light refraction may be changed through these grooves, so that the thickness of the lens may be effectively reduced in the case of a short focal length of the Fresnel lens.

For example, referring to Fig. 1, the first surface 101 and the second surface 102 are two surfaces of the lens 110, and the third surface 103 and the fourth surface 104 are two surfaces of the lens 120. Both the lens 110 and the lens 120 are Fresnel lenses. For example, the lens 110 is a convex lens, and the lens 120 is a concave lens.

As shown in Fig. 1, the surface types of the second surface 102 and the third surface 103 are complementary. Complementary means that after the second surface 102 is attached to the third surface 103 (or pasted by optical glue), there is basically no gap between the second surface 102 and the third surface 103. For example, the surface type of the second surface 102 and the surface type of the third surface 103 are positive and negative types of each other. For example, at the position where the second surface 102 corresponds to the third surface 103, the tooth-shaped structures on the two Fresnel surfaces may complement each other.

According to the optical system provided by at least one embodiment of the present disclosure, the lens assembly 100 including at least two lenses is provided with attachment positions for the reflective polarizing layer 200, the transflective film 300 and the phase retardation film 400, so that the folding of light rays is realized through the reflective polarizing layer 200 and the transflective film 300. The second surface 102 and the third surface 103 are configured as Fresnel surfaces, and the at least two lenses are configured to include lenses that differ in at least one of a dispersion coefficient or a refractive index, which is beneficial to increasing the degree of freedom in design through the Fresnel surfaces, thereby correcting the chromatic aberration in cooperation with the at least two lenses, and resulting in a larger field of view, higher clarity, and thinner and lighter weight of the optical system.

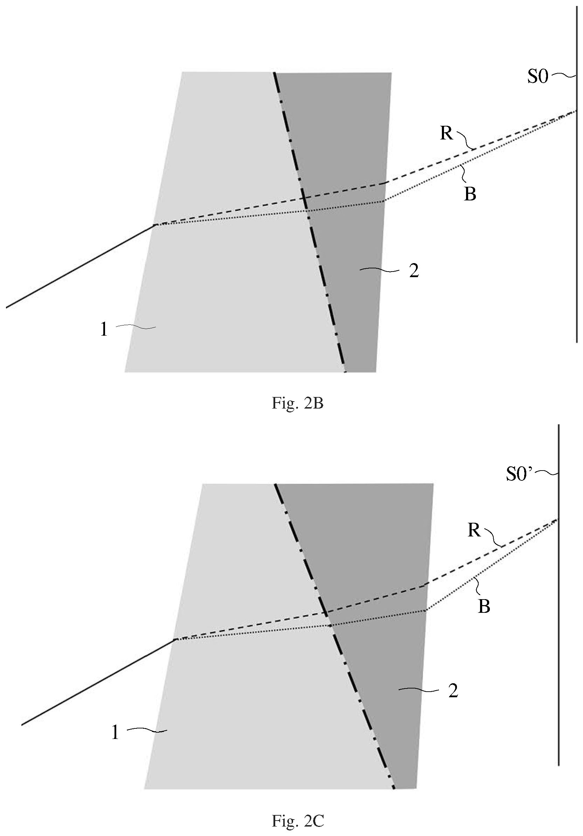

Figs. 2A and 2B are schematic diagrams of light deflection according to an example of at least one embodiment of the present disclosure. The chromatic aberration correction will be described below by taking an example in which the light rays incident on the optical system are refracted once.

Fig. 2A illustrates the case where the light rays are deflected in the optical system when the lens L1 and the lens L2 in the lens assembly have different refractive indices and different dispersion coefficients. As shown in Fig. 2A, the side away from the target surface S0 is the light incident side, that is, the light rays enter the lens assembly from the left side of Fig. 2A, and exit from the lens assembly to the target surface S0 after being refracted. After white light (solid line as shown in Fig. 2A) is incident on the lens assembly, the white light is dispersed and decomposed into monochromatic light of different wavelengths. In Fig. 2A, the long-dashed line represents red light R with a longer wavelength, and the dotted line represents blue light B with a shorter wavelength. By configuring the lens L1 and the lens L2 to have different refractive indices and different dispersion coefficients, the deflection angles of the red light R and the blue light B are changed, and finally the red light R and the blue light B may converge on the target surface S0.

For example, referring to Fig. 2A, the lens L1 is a convex lens, the lens L2 is a concave lens, the dispersion coefficient of the lens L1 is greater than the dispersion coefficient of the lens L2, and the refractive index of the lens **L1** is smaller than the refractive index of the lens L2. After the incident light enters the surface S1 and is dispersed, the blue light B with a relatively shorter wavelength is more biased toward the optical axis OA than the red light R. After being refracted by the surface S2 and the surface S3, because the dispersion coefficient of the lens **L1** is greater than that of the lens L2, the light rays are deflected in the direction away from the optical axis OA after entering the lens L2 from the lens L1, and the deflection degree of the blue light B with a relatively shorter wavelength is greater, so the red light R and the blue light B gradually approach each other. After the light rays exit through the surface S4, the light rays continue to deflect in the direction away from the optical axis OA, and the deflection degree of the blue light B with a relatively shorter wavelength is greater, so that the red light R and the blue light B converge on the target surface S0, thereby achieving the purpose of correcting chromatic aberration.

Fig. 2B simplifies the two lenses shown in Fig. 2A into two relatively placed optical wedges, and the inclination degree of the contact surface of the two lenses is the slope of the surface. As shown in Fig. 2B, after the white light enters the optical wedge 1, it is dispersed and decomposed into monochromatic light of different wavelengths. In Fig. 2B, the long-dashed line represents red light R with a longer wavelength, and the dotted line represents blue light B with a shorter wavelength. After the red light R (long-dashed line) and the blue light B (dotted line) enter the optical wedge 2, both the deflection degree of the red light R and the deflection degree of the blue light B are changed, so that the red light R and the blue light B may converge after exiting to the target surface S0.

Fig. 2C is a schematic diagram of light deflection according to another example of at least one embodiment of the present disclosure. The difference between Fig. 2C and Fig. 2B is that the slopes of the surfaces where the two optical wedges contact each other are different.

As shown in Fig. 2C and Fig. 1, Fig. 2C simplifies the lens 110 and the lens 120 shown in Fig. 1 into two relatively placed optical wedges. Fig. 2C illustrates the case where the light rays are deflected in the optical system when the two lenses in the lens assembly have different refractive indices and different dispersion coefficients, and the two surfaces where the two lenses contact each other are Fresnel surfaces that are positive and negative types of each other (not shown in Fig. 2C, for example, see Fig. 1). As shown in Fig. 2C, after the white light enters the optical wedge 1, it is dispersed and decomposed into monochromatic light of different wavelengths. In Fig. 2C, the long-dashed line represents red light R with a longer wavelength, and the dotted line represents blue light B with a shorter wavelength. As shown in Fig. 2C, because the contact surface of the two optical wedges is a Fresnel surface, the slope of the discretizable Fresnel surface is larger than the slope of the continuous aspheric surface, so the deflection capability for the light rays may be improved, and the red light R (long-dashed line) and the blue light B (dotted line) may converge on a closer target surface S0', thereby making the structure of the optical system more compact. Therefore, referring to Fig. 1, by configuring the second surface 102 and the third surface 103 as Fresnel surfaces and configuring the at least two lenses to differ in at least one of a dispersion coefficient or a refractive index, the chromatic aberration may be corrected together, resulting in a larger field of view, higher clarity, and thinner and lighter weight of the optical system.

For example, referring to Fig. 1, the reflective polarizing layer 200 has the following functions: there is a direction of an optical axis in the plane of the film layer, the transmittance of the polarization component (e.g., s linearly polarized light) of the incident light parallel to the direction of the optical axis is greater than the transmittance of the polarization component (e.g., p linearly polarized light) perpendicular to the direction of the optical axis, and the reflectivity of the polarization component (e.g., s linearly polarized light) parallel to the direction of the optical axis is smaller than the reflectivity of the polarization component (e.g., p linearly polarized light) perpendicular to the direction of the optical axis. For example, the transmittance of the polarized light parallel to the direction of the optical axis of the reflective polarizing layer 200 is not less than 85%, such as not less than 90%, such as not less than 95%, such as not less than 98%; the reflectivity of the polarized light perpendicular to the direction of the optical axis of the reflective polarizing layer 200 is not less than 85%, such as not less than 90%, such as not less than 95%, such as not less than 98%.

For example, referring to Fig. 1, the reflective polarizing layer 200 is configured to reflect linearly polarized light of one characteristic and transmit linearly polarized light of another characteristic; and the reflective polarizing layer 200 is disposed on a side of the first surface 101 away from the fourth surface 104, and the phase retardation film 400 is disposed between the reflective polarizing layer 200 and the transflective film 300. For example, the reflective polarizing layer may also be referred to as a polarizing beam splitting film. For example, the reflective polarizing layer may further include an Advanced Polarizer Film (APF). For example, the reflective polarizing layer may further include an Image Quality Polarizer Standard (IQPS) film or an Image Quality Polarizer Enhanced (IQPE) film.

For example, the reflective polarizing layer is a cholesteric liquid crystal layer (not shown in the figure), and the phase retardation film is disposed on a side of the cholesteric liquid crystal layer away from the transflective film. For example, the cholesteric liquid crystal may reflect circularly polarized light and transmit circularly polarized light. Referring to the principle of the preceding folded optical path, the cholesteric liquid crystal layer is disposed between the phase retardation film and the transflective film. A wave plate may be disposed on the display surface side of the display screen located on the side of the second lens away from the first lens, image light emitted by the display screen is converted into right-handed circularly polarized light after passing through the wave plate, the right-handed circularly polarized light is incident on the transflective film, and the polarization state of the right-handed circularly polarized light is unchanged after being transmitted through the transflective film. The right-handed circularly polarized light is reflected back to the transflective film after passing through the cholesteric liquid crystal layer, and the first reflection occurs here; the right-handed circularly polarized light is reflected at the transflective film, and the second reflection occurs here. Due to the half-wave loss, the reflected light is changed from right-handed circularly polarized light to left-handed circularly polarized light, the left-handed circularly polarized light reaches the phase retardation film after being transmitted through the cholesteric liquid crystal layer, and is converted into s-polarized light by the phase retardation film, and then the s linearly polarized light is transmitted through the linear polarizing film and then directed to the human eye.

For example, referring to Fig. 1, the transflective film 300 is configured to transmit part of light rays and reflect another part of light rays. For example, the transmittance of the transflective film 300 may be 50%, and the reflectivity may be 50%. For example, the transmittance of the transflective film 300 may be 60%, and the reflectivity may be 40%. For example, the transmittance of the transflective film 300 may be 65%, and the reflectivity may be 35%. The optical system provided by the present disclosure is not limited thereto, and the transmittance and reflectivity of the transflective film may be set according to product requirements. For example, the transflective film 300 may be coated on the fourth surface 104.

For example, referring to Fig. 1, the phase retardation film 400 is configured to enable the transmitted light to achieve a conversion between a circular polarization state and a linear polarization state. For example, the phase retardation film 400 may be a quarter-wave plate. For example, the phase retardation film 400 has the following characteristics: there is a direction with the lowest refractive index and a direction with the highest refractive index in the plane of the film layer, which are the fast axis and the slow axis, respectively, and the phase of the polarized light parallel to the slow axis is delayed by a quarter wavelength after passing through the phase retardation film 400 compared with the polarized light parallel to the fast axis after passing through the phase retardation film 400. For example, the angle between the slow axis of the phase retardation film 400 and the optical axis OA of the reflective polarizing layer 200 is 45 degrees.

For example, referring to Fig. 1, the material of the phase retardation film 400 may include a liquid crystal polymer. Since the phase retardation film 400 made of the liquid crystal polymer material is a polymer, its film thickness is relatively thinner, up to 1 micrometer to 5 micrometers. The thinner phase retardation film 400 has a higher degree of adaptation to curved surfaces, and may be more easily shaped according to the surface type of the curved surface, thereby reducing the possibility of generating wrinkles and affecting the phase retardation accuracy and optical performance when being attached to the curved surface. Moreover, the optical offset of the phase retardation film 400 made of the liquid crystal polymer material is smaller after being attached to the curved surface. The liquid crystal polymer is a cross-linked system, and the molecules are connected by chemical bonds, and the modulus is relatively high. When the phase retardation film 400 made of this material is stretched after being attached, only elastic deformation occurs, and no strong optical anisotropic effects such as molecular stretching and rearrangement occur. Therefore, the phase retardation film 400 made of the liquid crystal polymer material is suitable for the attachment of surface types with a small radius of curvature. Such a degree of freedom in the radius of curvature also makes it easier to meet the index requirements for clarity, distortion, dispersion, etc., which is beneficial to obtaining better image quality for the optical system.

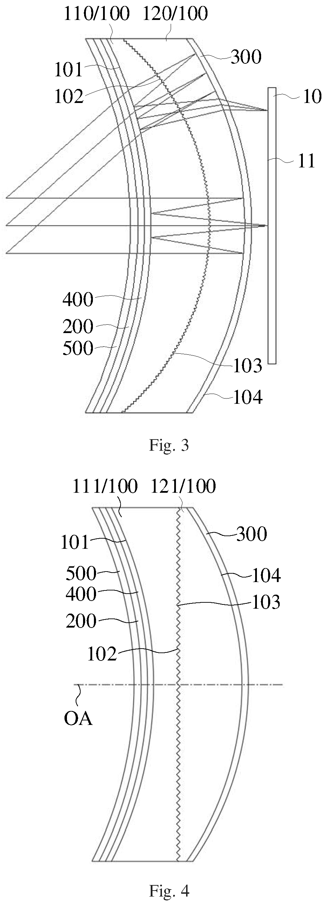

Fig. 3 is a schematic diagram of an optical path of a display apparatus according to an example of at least one embodiment of the present disclosure. At least one embodiment of the present disclosure provides a display apparatus. The display apparatus includes a display screen 10 and an optical system, and the display screen 10 is located on a side of the transflective film 300 away from the reflective polarizing layer 200. For example, referring to Fig. 3, the principle of the folded optical path is as follows: a wave plate may be disposed on the light exit side of the display surface 11 of the display screen 10 located on the side of the fourth surface 104 away from the first surface 101, image light emitted by the display surface 11 is converted into right-handed circularly polarized light after passing through the wave plate, and the polarization state of the right-handed circularly polarized light is unchanged after being transmitted through the transflective film 300. The light rays enter the lens assembly 100, reach the phase retardation film 400 after being transmitted through the lens assembly 100, the right-handed circularly polarized light incident on the phase retardation film 400 is converted into p linearly polarized light, and the p linearly polarized light is reflected by the reflective polarizing layer 200 back to the phase retardation film 400, where the first reflection occurs. Then, the p linearly polarized light is converted into right-handed circularly polarized light after passing through the phase retardation film 400, the right-handed circularly polarized light reaches the transflective film 300 after being transmitted through the lens assembly 100, and is reflected at the transflective film 300, where the second reflection occurs. Due to the half-wave loss, the reflected light is changed from right-handed circularly polarized light to left-handed circularly polarized light. The left-handed circularly polarized light reaches the phase retardation film 400 after being transmitted through the lens assembly 100, is changed to s linearly polarized light after passing through the phase retardation film 400, and then the s linearly polarized light is transmitted through the reflective polarizing layer 200 and then directed to the exit pupil, such as the human eye.

The preceding folded optical path may change the polarization state of the light rays propagating between the reflective polarizing layer 200 and the transflective film 300, and realize the folding of the light rays, so that the focal length of the optical system is folded due to the additional reflections (for example, two reflections) generated by the provision of the aforementioned reflective polarizing layer 200, the phase retardation film 400, and the transflective film 300, thereby greatly compressing the space required between the human eye and the optical system, and making the volume of the optical system smaller, thinner and lighter.

For example, the optical system further includes a linear polarizing film 500, and the linear polarizing film 500 is disposed on a side of the reflective polarizing layer 200 away from the transflective film 300. For example, the linear polarizing film 500 may be a linear polarizer or a polarizer. For example, the optical axis of the linear polarizing film 500 coincides with the optical axis of the reflective polarizing layer 200, for example, the linear polarizing film 500 may be used to further filter other stray light, and only allow the polarized light (e.g., s linearly polarized light) passing through the linear polarizing film 500 to enter the human eye. For example, the linear polarizing film may have a three-layer laminated structure, the middle layer in the three-layer laminated structure may be polyvinyl alcohol (PVA) added with dichroic molecules, and at least one layer located on both sides of the middle layer in the three-layer laminated structure may be cellulose triacetate (TAC). For example, the surface of the linear polarizing film 500 facing the air is subjected to anti-reflection treatment. For example, the surface of the linear polarizing film 500 facing the air may be attached to a moth eye film.

In some examples, referring to Fig. 1, a ratio of a radius of curvature of the second surface 102 to an effective focal length of the optical system may be -6 to 2. For example, the second surface 102 may be a curved Fresnel surface, and the radius of curvature of the second surface 102 refers to the radius of curvature of the curved Fresnel surface. For example, the radius of curvature of the second surface 102 refers to the radius of curvature of the Fresnel surface including the tooth-shaped structure. For example, the ratio of the radius of curvature of the second surface 102 to the effective focal length of the optical system may be -5 to 1.5. For example, the ratio of the radius of curvature of the second surface 102 to the effective focal length of the optical system may be -4 to 0. For example, the ratio of the radius of curvature of the second surface 102 to the effective focal length of the optical system may be -3 to -1. For example, the ratio of the radius of curvature of the second surface 102 to the effective focal length of the optical system may be -2.

For example, referring to Fig. 1, the second surface 102 of the Fresnel surface may be approximated to a smooth toothless spherical surface or aspheric surface, and the spherical surface or aspheric surface is a base surface of the Fresnel surface, and the curvature of the spherical surface or aspheric surface is the curvature of the Fresnel surface. For example, the tooth width or tooth height of the second surface 102 and the third surface 103 may be assumed to be infinitesimal. For example, the curvature of the base surface is -0.01 to -0.04. For example, the curvature of the base surface is -0.02 to - 0.03. In this way, it may be prevented that the tooth-shaped structure on the Fresnel surface is in contact with the surfaces (e.g., the first surface 101 or the fourth surface 104) located on both sides of the Fresnel surface (e.g., the second surface 102 and the third surface 103) on the optical axis OA.

Fig. 4 is a schematic diagram of an optical system according to an example of at least one embodiment of the present disclosure. The difference between the optical system shown in Fig. 4 and the optical system shown in Fig. 1 is that the second surface 102 in the optical system shown in Fig. 4 is different from the second surface 102 in the optical system shown in Fig. 1. Certainly, the optical system shown in Fig. 4 may also be different from the optical system shown in Fig. 1 in other aspects, such as the number of lenses included in the lens assembly, which is not limited by the present disclosure. For example, the number of lenses in the optical system shown in Fig. 4 may be different from or the same as the number of lenses in the optical system shown in Fig. 1. The reflective polarizing layer 200, the transflective film 300, and the linear polarizing film 500 in the optical system shown in Fig. 4 may have the same characteristics as the reflective polarizing layer 200, the transflective film 300, and the linear polarizing film 500 in the optical system shown in Fig. 1, which will not be repeated here.

In some examples, the second surface 102 is a planar Fresnel surface or a curved Fresnel surface. For example, as shown in Fig. 1, the second surface 102 is a curved Fresnel surface; as shown in Fig. 4, the second surface 102 is a planar Fresnel surface. It may be understood that the second surface 102 may be a convex surface, a concave surface, or a flat surface. For example, a continuous curved surface may be discretized to obtain a planar Fresnel surface whose base surface is a flat surface (e.g., referring to Fig. 4). For example, after a continuous curved surface is discretized, a discretized spherical curvature or aspherical curvature may be superimposed to obtain a curved Fresnel surface whose base surface is a curved surface (e.g., referring to Fig. 1). In this way, the radius of curvature of the Fresnel surface in the optical system has a larger adjustment space, so that the dispersed light rays may be better deflected and converged. In this way, by adjusting the slope of the Fresnel surface, the deflection capability of the second surface 102 and the third surface 103 to the light rays is enhanced, which not only realizes ultra-short throw, but also improves the correction effect of chromatic aberration and improves the clarity.

For example, referring to Fig. 1, the second surface 102 and the third surface 103 both bend toward the side away from the first surface 101, that is, the second surface 102 and the third surface 103 are both convex surfaces, so that the difference between the center thickness and the edge thickness of the first lens 110 is relatively small, and the difference between the center thickness and the edge thickness of the second lens 120 is relatively small, thereby reducing the machining difficulty. In addition, the curved Fresnel surface may also make it easier for the surface types of the second surface 102 and the third surface 103 to match the first surface 101 and the fourth surface 104, thereby reducing the thickness of the lens assembly 100 in the direction of the optical axis OA, and thus controlling the total optical length of the optical system.

In some examples, as shown in Fig. 1, a ratio of a radius of curvature of the first surface 101 to a radius of curvature of the fourth surface 104 may be 1.2 to 1.7. For example, the ratio of the radius of curvature of the first surface 101 to the radius of curvature of the fourth surface 104 may be 1.3 to 1.6. For example, the ratio of the radius of curvature of the first surface 101 to the radius of curvature of the fourth surface 104 may be 1.4 to 1.5.

In some examples, as shown in Fig. 1, a ratio of a radius of curvature of the first surface 101 to an effective focal length of the optical system may be -3.5 to -1.5, and a conic coefficient of the first surface 101 may be -10 to -0.5. For example, the ratio of the radius of curvature of the first surface 101 to the effective focal length of the optical system may be -3 to -2. For example, the ratio of the radius of curvature of the first surface 101 to the effective focal length of the optical system may be -2.5. For example, the conic coefficient of the first surface 101 may be -9 to -1. For example, the conic coefficient of the first surface 101 may be -8 to -2. For example, the conic coefficient of the first surface 101 may be - 7 to -3. For example, the conic coefficient of the first surface 101 may be -6 to -4. For example, the conic coefficient of the first surface 101 may be -5.

In some examples, as shown in Fig. 1, a ratio of a radius of curvature of the fourth surface 104 to the effective focal length of the optical system is -2.0 to 2.0, and a conic coefficient of the fourth surface 104 is -10 to -0.1. For example, the ratio of the radius of curvature of the fourth surface 104 to the effective focal length of the optical system may be -1.8 to 1.8. For example, the ratio of the radius of curvature of the fourth surface 104 to the effective focal length of the optical system may be -1.5 to 1.5. For example, the ratio of the radius of curvature of the fourth surface 104 to the effective focal length of the optical system may be -1 to 1. For example, the conic coefficient of the fourth surface 104 may be -9 to -1. For example, the conic coefficient of the fourth surface 104 may be -8 to -2. For example, the conic coefficient of the fourth surface 104 may be -7 to -3. For example, the conic coefficient of the fourth surface 104 may be -6 to -4. For example, the conic coefficient of the fourth surface 104 may be -5.

For example, the surface type of the curved Fresnel surface may be approximated to the surface type of an aspheric surface, for example, it may be expressed by the following numerical formula:
$z = \frac{{CY}^{2}}{1 + \sqrt{1 - \left(1+k\right) {C}^{2} {Y}^{2}}} + {\sum }_{i = 2}^{N} {α}_{i} {Y}^{2 i}$

For example, in the preceding formula, the height of the aspheric surface in the direction perpendicular to the optical axis is Y, the distance from the vertex of the aspheric surface to the projection of the point on the aspheric surface with the height of Y on the optical axis is z, that is, z is the coordinate in the direction of the optical axis; C is the curvature (the reciprocal of the radius of curvature R), k is the conic constant, αᵢ is the coefficient of each high-order term, and 2i is the order of aspherical coefficient.

In the actual optimization of the reasonable configuration of various parameters of the lens assembly, the values of the radius of curvature, the conic coefficient, the height, the aspheric coefficient and the like of each lens in the lens assembly are put into the preceding numerical formula, and the optimization parameters capable of correcting the aberration of each lens in the lens assembly are obtained through optical simulation calculation. The preferred values of the radius of curvature, the thickness along the optical axis, the effective aperture and the conic coefficient of each lens in the lens assembly are obtained through the optimization process.

For example, as shown in Fig. 1, the conic coefficient of the second surface 102 and the third surface 103 may be 0 to improve the efficiency of optimizing the Fresnel surface. For example, the conic coefficient of the second surface 102 and the third surface 103 may be less than 0. For example, the conic coefficient of the second surface 102 and the third surface 103 may be greater than 0.

In combination with the preceding examples, for example, the coefficient of the high-order coefficient of the first surface 101 satisfies: α₄=-1.0E-05, α₆=1.5E-07, α₈=1.1E-09, α₁₀=6.0E-12. For example, the coefficient of the high-order coefficient of the second surface 102 satisfies: α₄=-3.0E-05, α₆=-3.0E-08, α₈=0.0E+00, α₁₀=0.0E+00. For example, the coefficient of the high-order coefficient of the third surface 103 is exactly the same as the coefficient of the high-order coefficient of the second surface 102. For example, the coefficient of the high-order coefficient of the fourth surface 104 satisfies: α₄=-0.00003, α₆=-3.7E-08, α₈=6.0E-12, α₁₀=-2.0E-14.

In some examples, as shown in Fig. 1, a tooth width of the second surface 102 is 0.3 mm to 1 mm. For example, the second surface 102 includes a tooth-shaped structure, and the tooth-shaped structure includes a plurality of concentrically arranged tooth rings, and the tooth width is the spacing between two adjacent tooth rings. For example, in the plurality of tooth rings, the spacing between two adjacent tooth rings is equal. For example, the tooth width of the second surface 102 is 0.4 mm to 0.9 mm. For example, the tooth width of the second surface 102 is 0.5 mm to 0.8 mm. For example, the tooth width of the second surface 102 is 0.6 mm to 0.7 mm. By setting the tooth width to be 0.3 mm to 1 mm, the tooth profile of the second surface 102 can be made properly dense, which not only reduces the machining error and improves the optical efficiency, but also facilitates the molding of the tooth portion and demolding during injection molding.

For example, when the light is folded back in the optical system, each time the light passes through the Fresnel surface, it is necessary to consider the influence of the tooth portion on the Fresnel surface on the light, so as to prevent light leakage or light blocking, thereby reducing stray light and improving the imaging contrast. For example, in an example of an embodiment of the present disclosure, as shown in Fig. 3, the incident light passes through the second surface 102 and the third surface 103 three times successively in the process of folding back in the lens assembly 100, and the tooth height and the draft angle of the Fresnel surface may be obtained through optical simulation calculation according to the deflection angle of the light each time it passes through the second surface 102 or the third surface 103.

In some examples, as shown in Fig. 1, the at least two lenses include a first lens 110 and a second lens 120 that are arranged along the direction of the optical axis OA, the first lens 110 includes the first surface 101 and the second surface 102, and the second lens 120 includes the third surface 103 and the fourth surface 104. The dispersion coefficient of the first lens 110 is greater than the dispersion coefficient of the second lens 120. For example, the first lens 110 is a convex lens, and the second lens 120 is a concave lens. By setting the dispersion coefficient of the first lens 110 to be greater than the dispersion coefficient of the second lens 120, it is beneficial to the deflection of light rays of different wavelengths, so that the chromatic aberration may be better corrected.

In some examples, as shown in Fig. 1, the dispersion coefficient of the first lens 110 may be 25 to 65, and the dispersion coefficient of the second lens 120 may be 30 to 54. For example, the dispersion coefficient of the first lens 110 may be 30 to 60. For example, the dispersion coefficient of the first lens 110 may be 35 to 55. For example, the dispersion coefficient of the first lens 110 may be 40 to 50. For example, the dispersion coefficient of the first lens 110 may be 45. For example, the dispersion coefficient of the second lens 120 may be 35 to 50. For example, the dispersion coefficient of the second lens 120 may be 40 to 45. For example, the dispersion coefficient of the first lens 110 may be 55 to 65, and the dispersion coefficient of the second lens 120 may be 30 to 40. For example, the dispersion coefficient of the first lens 110 may be 55 to 57, and the dispersion coefficient of the second lens 120 may be 49 to 51. For example, the dispersion coefficient of the first lens 110 may be 56, and the dispersion coefficient of the second lens 120 may be 50. It may be understood that the present disclosure only exemplifies the dispersion coefficient of the first lens 110 and the dispersion coefficient of the second lens 120. The dispersion coefficient of the first lens 110 and the dispersion coefficient of the second lens 120 may be relatively close or may differ greatly. As long as the dispersion coefficient of the first lens 110 is greater than the dispersion coefficient of the second lens 120, the present disclosure does not limit the combination of values.

In some examples, as shown in Fig. 1, the at least two lenses include a first lens 110 and a second lens 120 that are arranged along the direction of the optical axis OA, the first lens 110 includes the first surface 101 and the second surface 102, and the second lens 120 includes the third surface 103 and the fourth surface 104. The refractive index of the first lens 110 is less than the refractive index of the second lens 120. For example, the refractive index is approximately inversely proportional to the dispersion coefficient. For example, the smaller the refractive index, the relatively larger the dispersion coefficient. For example, the smaller the dispersion coefficient, the relatively larger the refractive index. For example, the first lens 110 is a convex lens, and the second lens 120 is a concave lens. By setting the refractive index of the first lens 110 to be less than the refractive index of the second lens 120, it is beneficial to the deflection of light rays of different wavelengths, so that the chromatic aberration may be better corrected.

For example, as shown in Fig. 1, the refractive index of the first lens 110 may be 1.4 to 1.7. For example, the refractive index of the first lens 110 may be 1.5 to 1.6. For example, the refractive index of the second lens 120 may be 1.4 to 1.7. For example, the refractive index of the second lens 120 may be 1.5 to 1.6. For example, the refractive index of the first lens 110 may be 1.55, and the refractive index of the second lens 120 may be 1.59. It may be understood that the present disclosure only exemplifies the refractive index of the first lens 110 and the refractive index of the second lens 120. The refractive index of the first lens 110 and the refractive index of the second lens 120 may be relatively close or may differ greatly. As long as the refractive index of the first lens 110 is less than the refractive index of the second lens 120, the present disclosure does not limit the combination of values.

For example, as shown in Fig. 1, different materials may be selected for the first lens 110 and the second lens 120, so that the dispersion coefficient of the first lens 110 is different from the dispersion coefficient of the second lens 120, and the refractive index of the first lens 110 is different from the refractive index of the second lens 120. For example, after the first lens 110 and the second lens 120 are injection molded respectively, the first lens 110 and the second lens 120 may be glued together by elastic glue. For example, after the first lens 110 is injection molded, a casting process may be used to pour a liquid optical material between the first lens 110 and a mold, which is then cured to form a solid shape, thereby forming the second lens 120. For example, by selecting the liquid optical material, the material of the cured second lens 120 may be a hard polymer or elastic optical silica gel. For example, the hard polymer may be a monomer polymer, the refractive index is 1.554, and the dispersion coefficient is 39.3. For example, the elastic optical silica gel may be silicone rubber. For example, the optical silica gel has a refractive index of 1.41 and a dispersion coefficient of 52. For example, the optical silica gel has a refractive index of 1.41 and a dispersion coefficient of 50. For example, the second lens 120 may be injection molded first, and then the liquid optical material is poured between the second lens 120 and the mold through the casting process and cured to form a solid shape, so as to form the first lens 110.

For example, Fig. 1 schematically shows the influence of each film layer on the distance between different surfaces of the lens assembly. For example, when the thickness of each film layer is relatively thin, the thickness of the film layer may be ignored.

In some examples, as shown in Fig. 1, the distance between two intersection points at which the first surface 101 and the second surface 102 intersect with the optical axis OA is a first distance D1. For example, the first distance D1 is the center thickness of the first lens 110. As shown in Fig. 1, the distance between two intersection points at which the third surface 103 and the fourth surface 104 intersect with the optical axis OA is a second distance D2. For example, the second distance D2 is the center thickness of the second lens 120. A ratio of the first distance D1 to the second distance D2 may be 2 to 4 (2:1 to 4:1). For example, the ratio of the first distance D1 to the second distance D2 may be 2.5 to 3.5.

In some examples, as shown in Fig. 1, a ratio of the first distance D1 to an effective focal length of the optical system may be 0.3 to 0.5. For example, the ratio of the first distance D1 to the effective focal length of the optical system may be 0.35 to 0.45. For example, the ratio of the first distance D1 to the effective focal length of the optical system may be 0.4. In some examples, a ratio of the second distance D2 to the effective focal length of the optical system may be 0.1 to 0.3. For example, the ratio of the second distance D2 to the effective focal length of the optical system may be 0.15 to 1.25. For example, the ratio of the second distance D2 to the effective focal length of the optical system may be 0.2.

In some examples, as shown in Fig. 1, the at least two lenses include a first lens 110 and a second lens 120 that are arranged along the direction of the optical axis OA, the first lens 110 includes the first surface 101 and the second surface 102, and the second lens 120 includes the third surface 103 and the fourth surface 104. In some examples, a ratio of a center thickness to an edge thickness of the first lens 110 is greater than 1 and less than 3. For example, the ratio of the center thickness to the edge thickness of the first lens 110 is greater than 1.5 and less than 2.5. In some examples, a ratio of a center thickness to an edge thickness of the second lens 120 is greater than 0.5 and less than 2. For example, the ratio of the center thickness to the edge thickness of the second lens 120 is greater than 1 and less than 1.5. Setting the proportional relationship between the center thickness and the edge thickness of each of the preceding lenses is beneficial to ensuring the injection molding of each lens.

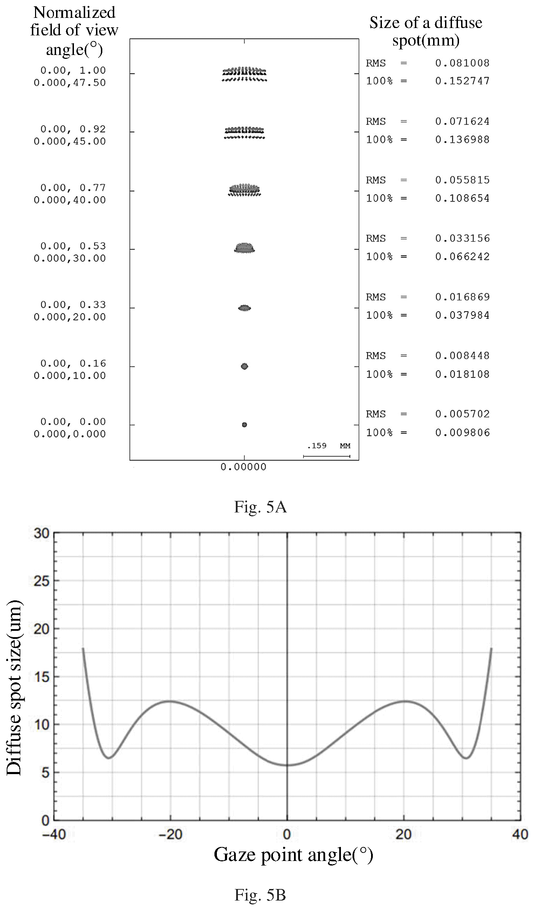

In combination with the preceding examples, Fig. 5A is a spot diagram of the optical system shown in Fig. 1. Fig. 5B is a curve diagram of the change in the size of a diffuse spot with the field of view of the optical system shown in Fig. 1.

Referring to Fig. 5A, the spot diagram refers to a dispersion pattern scattered in a certain range, instead of concentrating on the same point, for the intersection points of many light rays emitted from one point with the image plane due to aberration after passing through the optical system, and the spot diagram may be used to evaluate the imaging quality of the optical system. In Fig. 5A, taking the first group of values in the left longitudinal direction as an example, 0.00 represents the normalized field of view in the X direction, 1.00 represents the normalized field of view in the Y direction, 0.000 represents the field angle in the X direction, and 47.50 represents the field angle in the Y direction. In Fig. 5A, taking the first group of values in the right longitudinal direction as an example, RMS represents the root mean square of the radius from the diffusion point of the diffuse spot to the center of mass (or the center of the diffuse spot) of the diffuse spot, and 100% represents the diameter of the diffuse spot. Fig. 5A is usually used to evaluate the full field of view clarity of the optical system, that is, when the pupil of the human eye is at the entrance pupil position on the optical axis and gazing at the center of the lens (i.e., zero field of view), the imaging clarity of the full field of view range that may be covered by the peripheral vision, which is also called the transient mode. In addition to considering the full field of view clarity in the transient mode, the gaze point clarity is one of the more important optical indicators for a wearer wearing a head-mounted display, for example. The gaze point clarity refers to the image clarity within a certain angular range that may be directly seen (instead of being seen from the peripheral vision) when the eyes turn up, down, left and right.

In the gaze point mode, the eyeball rotates by a certain angle, and the pupil deviates from the center of the optical axis. The optical axis has a certain deviation in the Z direction and the Y direction, and the chief ray passing through the center of the pupil has a certain angle with the Z axis. For example, the range of the angle is ±35 degrees, and the range of the angle is set considering the observation habits of the human eyes. To see clearly an object in front that exceeds the range of 35 degrees from the center of the human eyes, a person may actively turn the head instead of laboriously rotating the eyeball. Referring to Fig. 5B, Fig. 5B shows the relationship between the gaze point clarity and the gaze angle. The diffuse spot in the central field of view is much smaller than one pixel, and the diameter of the diffuse spot is less than 15 micrometers when the human eyes turn to 20 degrees. It may be seen from Fig. 5B that the diffuse spot of the optical system of the present application is relatively small and the resolution of the optical system is relatively high. In conclusion, the optical system provided by at least one embodiment of the present disclosure may form clear images.

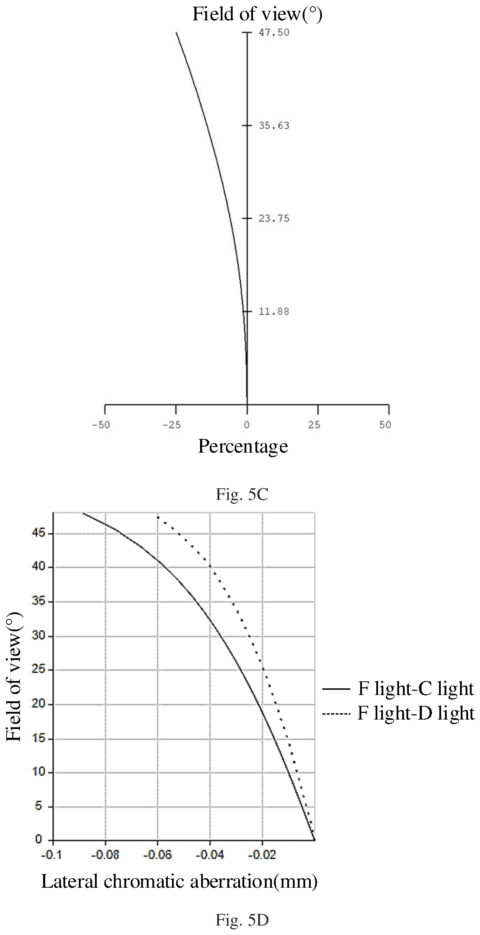

Fig. 5C is a distortion diagram of the optical system shown in Fig. 1. Referring to Fig. 5C, the distortion diagram reflects the image plane position difference of clear images formed by different fields of view, and as shown in Fig. 5C, the maximum absolute value of distortion is within 50%. It may be seen that the optical system provided by at least one embodiment of the present disclosure may better correct the distortion to meet the requirements for high-quality imaging. In addition, the distortion correction may be pre-processed in software.

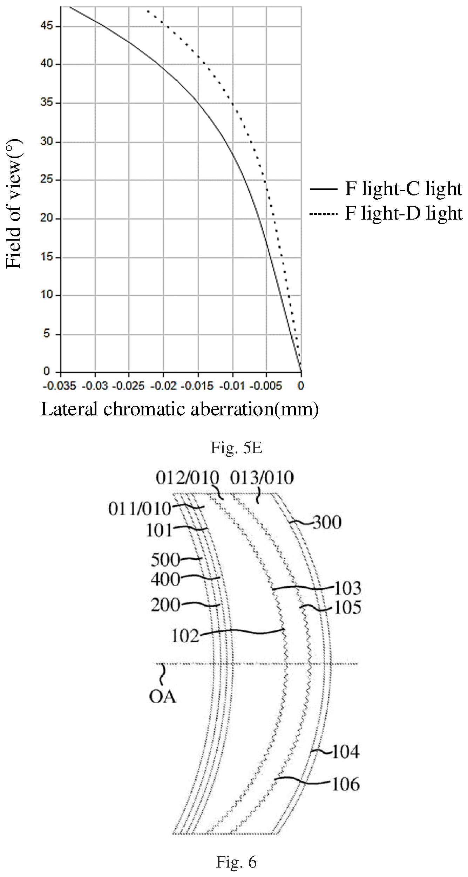

Fig. 5D is a lateral chromatic aberration diagram of an optical system. Fig. 5E is a lateral chromatic aberration diagram of the optical system shown in Fig. 1.

Referring to Fig. 5D and Fig. 5E, the lateral chromatic aberration diagram represents the height difference of each wavelength relative to the center wavelength at different image heights on the imaging surface, the horizontal axis represents the lateral chromatic aberration value of each wavelength relative to the center wavelength, and the vertical axis represents the normalized field of view angle. As shown in Fig. 5D and Fig. 5E, the F light is cyan light, the C light is red light, and the D light is yellow light. The C light and the F light are located at both ends of the sensitive region of the human eyes, and the D light is located in the spectral line close to the most sensitive region of the human eyes. Referring to Fig. 5D, Fig. 5D shows the lateral chromatic aberration result of a single-piece optical system. It may be seen from the figure that the absolute value of the lateral chromatic aberration between the F light and the C light is within approximately 0.1 mm, and the absolute value of the lateral chromatic aberration between the F light and the D light is within approximately 0.06 mm. It may be seen from Fig. 5E that the absolute value of the lateral chromatic aberration between the F light and the C light is controlled within 0.035 mm, and the absolute value of the lateral chromatic aberration between the F light and the D light is controlled within 0.025 mm. By comparing Fig. 5E with Fig. 5D, it may be seen that the lateral chromatic aberration of the optical system shown in Fig. 1 provided by the present disclosure may be reduced to 1/3 at the maximum field of view and the chromatic aberration may be reduced to 1/6, compared with the single-piece optical system, indicating that the optical system shown in Fig. 1, for example, may extremely well correct the chromatic aberration of the edge field of view and the secondary spectrum of the entire image plane.

Fig. 6 is a schematic diagram of an optical system according to an example of at least one embodiment of the present disclosure. The difference between the optical system shown in Fig. 6 and the optical system shown in Fig. 1 is that the number of lenses in the optical system shown in Fig. 6 is different from the number of lenses in the optical system shown in Fig. 1. Certainly, the optical system shown in Fig. 6 may also be different from the optical system shown in Fig. 1 in other aspects, such as the surface type of at least one lens, which is not limited by the present disclosure. For example, the surface type parameters of the first surface 101 to the fourth surface 104 in the optical system shown in Fig. 6 may be different from or the same as the surface type parameters of the first surface 101 to the fourth surface 104 in the optical system shown in Fig. 1. The reflective polarizing layer 200, the transflective film 300, and the linear polarizing film 500 in the optical system shown in Fig. 6 may have the same characteristics as the reflective polarizing layer 200, the transflective film 300, and the linear polarizing film 500 in the optical system shown in Fig. 1, which will not be repeated here.

In some examples, as shown in Fig. 6, the at least two lenses include a first lens 011, a second lens 012, and a third lens 013 that are arranged in sequence along the direction of the optical axis OA, the first lens 011 includes the first surface 101 and the second surface 102, the second lens 012 includes the third surface 103, and the third lens 013 includes the fourth surface 104. The second lens 012 further includes a fifth surface 105 opposite to the third surface 103, and the third lens 013 further includes a sixth surface 106 located between the fifth surface 105 and the fourth surface 104. At least two of the first lens 011, the second lens 012, and the third lens 013 have different dispersion coefficients. For example, the first lens 011 and the second lens 012 have different dispersion coefficients, and the second lens 012 and the third lens 013 have the same dispersion coefficient. For example, the first lens 011 and the third lens 013 have different dispersion coefficients, and the first lens 011 and the second lens 012 have the same dispersion coefficient. For example, the second lens 012 and the third lens 013 have different dispersion coefficients, and the first lens 011 and the third lens 013 have the same dispersion coefficient. For example, the first lens 011, the second lens 012, and the third lens 013 have different dispersion coefficients.

For example, when two of the first lens 011, the second lens 012, and the third lens 013 are made of the same optical material, it is possible to consider the optical characteristics such as the spectral transmittance, the refractive index, and the Abbe number, and also possible to consider the workability such as the fluidity, the heat shrinkage rate, the stress, and the cost of the material. For example, materials such as optical grade polymethyl methacrylate (PMMA), polycarbonate (PC), cyclic olefin copolymer (COC), cyclic olefin homopolymer (COP), and polyethylene terephthalate (PET) may be used.

In some examples, as shown in Fig. 6, a ratio of a radius of curvature of the fifth surface 105 to a radius of curvature of the second surface 102 is 0.9 to 1.1. For example, the surface type of the fifth surface 105 is similar to the surface type of the second surface 102. The fifth surface 105 and the sixth surface 106 are both Fresnel surfaces, and the surface types of the fifth surface 105 and the sixth surface 106 are complementary. Complementary means that after the fifth surface 105 is attached to the sixth surface 106 (or pasted by optical glue), there is basically no gap between the fifth surface 105 and the sixth surface 106. For example, the surface type of the fifth surface 105 and the surface type of the sixth surface 106 are positive and negative types of each other. For example, at the position where the fifth surface 105 corresponds to the sixth surface 106, the tooth-shaped structures on the two Fresnel surfaces may complement each other.

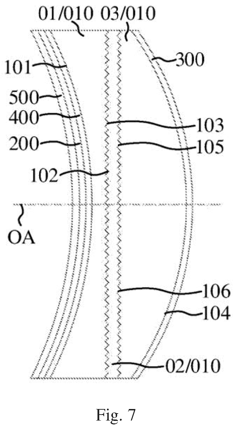

Fig. 7 is a schematic diagram of an optical system according to an example of at least one embodiment of the present disclosure. The difference between the optical system shown in Fig. 7 and the optical system shown in Fig. 6 is that the surface type parameters in the optical system shown in Fig. 7 are different from the surface type parameters in the optical system shown in Fig. 6. Certainly, the optical system shown in Fig. 6 may also be different from the optical system shown in Fig. 1 in other aspects, such as the number of lenses included in the lens assembly, which is not limited by the present disclosure. For example, the number of lenses in the optical system shown in Fig. 7 may be different from or the same as the number of lenses in the optical system shown in Fig. 6. The reflective polarizing layer 200, the transflective film 300, and the linear polarizing film 500 in the optical system shown in Fig. 7 may have the same characteristics as the reflective polarizing layer 200, the transflective film 300, and the linear polarizing film 500 in the optical system shown in Fig. 6, which will not be repeated here.

In some examples, as shown in Fig. 6 and Fig. 7, the fifth surface 105 is a planar Fresnel surface or a curved Fresnel surface. For example, as shown in Fig. 6, the fifth surface 105 and the sixth surface 106 are both curved Fresnel surfaces. For example, as shown in Fig. 7, the fifth surface 105 and the sixth surface 106 are both planar Fresnel surfaces. It may be understood that the fifth surface 105 may be a convex surface, a concave surface, or a flat surface. For example, the second surface 102 and the fifth surface 105 both bend toward the side away from the first surface 101, so that the difference between the center thickness and the edge thickness of the second lens 02 is relatively small, and the difference between the center thickness and the edge thickness of the third lens 03 is relatively small, thereby reducing the machining difficulty.

For example, as shown in Fig. 7, the second surface 102 of the first lens 01 is a planar Fresnel surface, the third surface 103 and the fifth surface 105 of the second lens 02 are planar Fresnel surfaces, and the sixth surface 106 of the third lens 03 is a planar Fresnel surface. For example, as shown in Fig. 7, the surface types of the second surface 102 and the third surface 103 are complementary, and the surface types of the fifth surface 105 and the sixth surface 106 are complementary.

For example, referring to Fig. 7, a continuous curved surface may be discretized to obtain a planar Fresnel surface. For example, referring to Fig. 6, after a continuous curved surface is discretized, a discretized spherical curvature may be superimposed to obtain a curved Fresnel surface. In this way, the radius of curvature of the Fresnel surface in the optical system has a larger adjustment space, so that the dispersed light rays may be better deflected and converged. In this way, by adjusting the slope of the Fresnel surface, the deflection capability of the fifth surface 105 and the sixth surface 106 to the light rays is enhanced, which not only realizes ultra-short throw, but also improves the correction effect of chromatic aberration and improves the clarity.

For example, referring to Fig. 1 and Fig. 3, a ratio of a total optical length (TTL) of the optical system to an effective focal length of the optical system is 0.85 to 1. For example, the ratio of the total optical length of the optical system to the effective focal length of the optical system is 0.9 to 0.95. The total optical length refers to the distance from the highest point on the first surface 101 of the lens assembly 100 in the optical system to the center of the display screen 10 along the optical axis OA. The highest point on the first surface 101 includes the edge sag of the lens assembly 100 on the side where the first surface 101 is located.

For example, as shown in Fig. 1 and Fig. 3, the field of view of the optical system is greater than 90°. For example, the field of view is a full field of view. For example, the field of view of the optical system may be, but is not limited to, 90°, 92°, 94°, 96°, 98°, and 100°. For example, calculating with an effective aperture that may reach a field of view of 100°, the weight of the binocular lens is about 20 g.

For example, as shown in Fig. 1 and Fig. 3, an exit pupil distance (EPD) of the optical system is 12 mm to 20 mm. For example, the exit pupil distance is the distance from the vertex of the last surface of the optical system to the intersection of the exit pupil plane and the optical axis. For example, the exit pupil distance is 14 mm to 18 mm. For example, the exit pupil distance is 15 mm. The optical system provided by the present disclosure has a large exit pupil distance, which may satisfy myopic users to wear glasses for use.

Referring to Fig. 3, at least one embodiment of the present disclosure provides a display apparatus, which includes a display screen 10 and the optical system of any one of the preceding embodiments. The display screen 10 is located on a side of the fourth surface 104 away from the first surface 101. Since the display apparatus according to the embodiments of the present disclosure includes at least one of the preceding optical systems, it also has corresponding beneficial technical effects, which will not be repeated here. It may be understood that the display screen 10 shown in Fig. 3 may be matched with the optical systems shown in Fig. 1, Fig. 4, Fig. 6, and Fig. 7 to form different display apparatuses.

For example, as shown in Fig. 3, the display surface 11 of the display screen 10 is located on the focal plane on the light incident side of the optical system.

For example, as shown in Fig. 3, a ratio of an effective aperture of the lens assembly 100 to the effective focal length of the lens assembly 100 is 2.2 to 2.4. The effective aperture of the preceding lens assembly 100 refers to an effective clear aperture, such as the largest aperture through which light may pass through the lens assembly 100, and the aperture is determined by the maximum luminous flux of the lens assembly 100. For example, the ratio of the effective aperture to the effective focal length is 2.3.

For example, as shown in Fig. 3, a ratio of a distance between the diaphragm (e.g., the human eye) in the optical system and the first surface 101 on the optical axis OA to the effective focal length is 0.7 to 1.5. For example, the ratio of the distance between the diaphragm and the first surface 101 on the optical axis OA to the effective focal length is 0.8 to 1.4. For example, the ratio of the distance between the diaphragm and the first surface 101 on the optical axis OA to the effective focal length is 0.9 to 1.3. For example, the ratio of the distance between the diaphragm and the first surface 101 on the optical axis OA to the effective focal length is 1 to 1.2. For example, the ratio of the distance between the diaphragm and the first surface 101 on the optical axis OA to the effective focal length is 1.1.

For example, as shown in Fig. 3, the effective aperture of the diaphragm is 4 mm. For example, a ratio of a distance between an object plane and the diaphragm on the optical axis OA in the optical system to the effective focal length is below -80. For example, a ratio of an effective aperture of the image plane to the effective focal length in the optical system is 1.5.

For example, as shown in Fig. 3, a ratio of a distance between the display surface 11 of the display screen 10 and the image plane on the optical axis OA to the effective focal length is 0.03 to 0.12. For example, the ratio of the distance between the display surface 11 of the display screen 10 and the image plane on the optical axis OA to the effective focal length is 0.06 to 0.09. For example, the ratio of the distance between the display surface 11 of the display screen 10 and the image plane on the optical axis OA to the effective focal length is 0.08.

For example, as shown in Fig. 3, a ratio of a distance between the fourth surface 104 and the display surface 11 of the display screen 10 on the optical axis OA to the effective focal length is 0.05 to 0.3. For example, the ratio of the distance between the fourth surface 104 and the display surface 11 of the display screen 10 on the optical axis OA to the effective focal length is 0.06 to 0.2. The ratio of the distance between the fourth surface 104 and the display surface 11 of the display screen 10 on the optical axis OA to the effective focal length is 0.1.

For example, as shown in Fig. 3, the display screen 10 may be any type of display screen, such as a liquid crystal display screen, an organic light emitting diode display screen, an inorganic light emitting diode display screen, a quantum dot display screen, a projector (e.g., an LCOS mini projector), etc.

For example, as shown in Fig. 3, the display screen 10 is a liquid crystal display screen with a pixel size of about twenty-some micrometers. For example, the display screen is an organic light emitting diode display screen with a pixel size of about a few micrometers.

For example, the display apparatus may be a virtual reality display apparatus. For example, the virtual reality display apparatus may be a display apparatus using an ultra-short throw folded optical path.

For example, the display apparatus may be a near-eye display apparatus, and the near-eye display apparatus may be a wearable VR helmet, VR glasses, etc., which is not limited by the embodiments of the present disclosure.

The following points need to be noted:
(1) In the drawings of the embodiments of the present disclosure, only the structures related to the embodiments of the present disclosure are involved, and for other structures, reference may be made to general designs.
(2) The features in the same embodiment or different embodiments of the present disclosure may be combined with each other without conflict.

The preceding descriptions are only exemplary implementations of the present disclosure, and are not used to limit the protection scope of the present disclosure. The protection scope of the present disclosure is determined by the appended claims.

## Claims

1. An optical system, comprising:
a lens assembly, comprising at least two lenses, the at least two lenses comprising a first surface, a second surface, a third surface, and a fourth surface that are arranged in sequence along a direction of an optical axis of the lens assembly;
a reflective polarizing layer, disposed on a side of the first surface away from the fourth surface;
a transflective film, disposed on a side of the fourth surface away from the third surface; and
a phase retardation film, disposed on a side of the transflective film facing the first surface;
wherein the first surface is a concave surface, and the fourth surface is a convex surface; the second surface and the third surface are both Fresnel surfaces, and surface types of the second surface and the third surface are complementary; and
the at least two lenses comprise lenses that differ in at least one of a dispersion coefficient or a refractive index.

2. The optical system of claim 1, wherein a ratio of a radius of curvature of the second surface to an effective focal length of the optical system is in a range from -6 to 2.

3. The optical system of claim 1 or 2, wherein a tooth width of the second surface is in a range from 0.3 millimeters to 1 millimeter.

4. The optical system of any of claims 1 to 3, wherein the second surface is a planar Fresnel surface or a curved Fresnel surface.

5. The optical system of any of claims 1 to 4, wherein the at least two lenses comprise a first lens and a second lens that are arranged along the direction of the optical axis, the first lens comprises the first surface and the second surface, and the second lens comprises the third surface and the fourth surface; and
a dispersion coefficient of the first lens is greater than a dispersion coefficient of the second lens.

6. The optical system of claim 5, wherein the dispersion coefficient of the first lens is in a range from 25 to 65, and the dispersion coefficient of the second lens is in a range from 30 to 54.

7. The optical system of any of claims 1 to 4, wherein the at least two lenses comprise a first lens and a second lens that are arranged along the direction of the optical axis, the first lens comprises the first surface and the second surface, the second lens comprises the third surface and the fourth surface, and
a refractive index of the first lens is less than a refractive index of the second lens.

8. The optical system of any of claims 1 to 7, wherein a ratio of a radius of curvature of the first surface to a radius of curvature of the fourth surface is in a range from 1.2 to 1.7.

9. The optical system of claim 8, wherein a ratio of the radius of curvature of the first surface to an effective focal length of the optical system is in a range from -3.5 to -1.5, and a conic coefficient of the first surface is in a range from -10 to -0.5.

10. The optical system of claim 8 or 9, wherein a ratio of the radius of curvature of the fourth surface to an effective focal length of the optical system is in a range from -2.0 to 2.0, and a conic coefficient of the fourth surface is in a range from -10 to -0.1.

11. The optical system of any of claims 1 to 10, wherein a distance between two intersection points at which the first surface and the second surface intersect with the optical axis is a first distance;
a distance between two intersection points at which the third surface and the fourth surface intersect with the optical axis is a second distance; and
a ratio of the first distance to the second distance is in a range from 2 to 4.

12. The optical system of claim 11, wherein a ratio of the first distance to an effective focal length of the optical system is in a range from 0.3 to 0.5, and a ratio of the second distance to the effective focal length of the optical system is in a range from 0.1 to 0.3.

13. The optical system of any of claims 1 to 4, wherein the at least two lenses comprise a first lens and a second lens that are arranged along the direction of the optical axis, the first lens comprises the first surface and the second surface, and the second lens comprises the third surface and the fourth surface;
a ratio of a center thickness to an edge thickness of the first lens is greater than 1 and less than 3; and
a ratio of a center thickness to an edge thickness of the second lens is greater than 0.5 and less than 2.

14. The optical system of any of claims 1 to 4, wherein the at least two lenses comprise a first lens, a second lens, and a third lens that are arranged in sequence along the direction of the optical axis, the first lens comprises the first surface and the second surface, the second lens comprises the third surface, and the third lens comprises the fourth surface;
the second lens further comprises a fifth surface opposite to the third surface, and the third lens further comprises a sixth surface between the fifth surface and the fourth surface; and
at least two selected from the group consisting of the first lens, the second lens, and the third lens have different dispersion coefficients.

15. The optical system of claim 14, wherein a ratio of a radius of curvature of the fifth surface to a radius of curvature of the second surface is in a range from 0.9 to 1.1, the fifth surface and the sixth surface are both Fresnel surfaces, and surface types of the fifth surface and the sixth surface are complementary.

16. The optical system of claim 15, wherein the fifth surface is a planar Fresnel surface or a curved Fresnel surface.

17. A display apparatus, comprising a display screen and the optical system of any of claims 1 to 16, wherein the display screen is located on a side of the transflective film away from the reflective polarizing layer.
